# EUROPEAN PATENT SPECIFICATION

(11) **EP 4 660 056 B1**
(45) Date of publication and mention of the grant of the patent: **09.12.2026**
(21) Application number: 25178732.1
(22) Date of filing: 26.05.2025
(51) Int. Cl.: B62D 21/15, B60K 1/04, B62D 25/02, B62D 25/20

(54) **LOWER STRUCTURE OF VEHICLE**
UNTERE STRUKTUR EINES FAHRZEUGS
STRUCTURE INFÉRIEURE DE VÉHICULE

(30) Priority: 07.06.2024 JP 2024093033
(43) Date of publication of application: 10.12.2025
(73) Proprietor: MAZDA MOTOR CORPORATION, Hiroshima 730-8670 (JP)
(72) Inventor: Kamemoto, Eiji, Aki-gun, Hiroshima, 730-8670 (JP); Tsukamoto, Hideyuki, Aki-gun, Hiroshima, 730-8670 (JP); Natsume, Hirotaka, Aki-gun, Hiroshima, 730-8670 (JP)
(74) Representative: Lorenz Seidler Gossel Part. mbB

(56) References cited:
- EP-A2- 1 806 271
- WO-A1-2019/162583
- JP-A- 2020 055 473
- US-A1- 20240 140 532

## Description

### BACKGROUND OF THE INVENTION

The present invention relates to a lower structure of a vehicle.

It has been considered to arrange a reinforcing member inside a side sill as countermeasures for a pole side-collision of a vehicle.

Japanese Patent Laid-Open Publication No. 2021-024350, for example, discloses a vehicle-body structure in which a reinforcing member (reinforcement) having a continuous-cylindrical structure in which plural polygonal-shaped closed-cross sections are continuous when viewed in a vehicle width direction and a deformation-control member to control deformation, in a vehicle longitudinal direction, of the continuous-cylindrical structure of the reinforcing member are arranged inside a side sill extending in a vehicle longitudinal direction.

The vehicle-body structure of the above-described patent document take measures for the pole side-collision of the vehicle by maintaining the cylindrical structure of the reinforcement even in the vehicle side collision. Thereby, it is expected that a collision load can be transmitted to a vehicle-body constituting member extending in the vehicle width direction, such as a cross member.

However, in a case where the pole side-collision occurs at a portion between the plural cross members, if a shape of the reinforcement is maintained, there is a concern that the side sill may come in toward an inside of a cabin together with the reinforcement. Meanwhile, if the reinforcement is configured such that its rigidity is so low that it can be deformed easily, there is another concern that the load may not be properly transmitted to the cross member and the like. Document EP 1 806 271 A2 shows a lower structure according to the preamble of claim 1.

### SUMMARY OF THE INVENTION

The present invention has been devised in view of the above-described matter and an object of the present invention is to provide a lower structure of a vehicle which can properly absorb the collision load, suppressing a situation where the side sill comes in toward the inside of the cabin in the vehicle side collision.

The lower structure of the vehicle of the present invention comprises a pair of right-and-left side sills extending in a vehicle longitudinal direction and having a closed-cross section, plural cross members extending in a vehicle width direction between the pair of side sills and provided to be separated from each other in the vehicle longitudinal direction, and a reinforcement extending in the vehicle longitudinal direction inside the closed-cross section of each of the pair of side sills and reinforcing the side sill, a position, in a vertical direction, of which overlaps the cross members, wherein the reinforcement includes a first area which overlaps, in the vehicle longitudinal direction, the cross members and a second area which is positioned, in the vehicle longitudinal direction, between the cross members, and an inward-side end portion, in the vehicle width direction, of the second area of the reinforcement is positioned on an outward side, in the vehicle width direction, of an inward-side end portion, in the vehicle width direction, of the first area of the reinforcement.

According to the present invention, when the pole-side collision occurs in the first area of the reinforcement, the collision load can be efficiently transmitted to the cross members by the reinforcement. Meanwhile, when the pole-side collision occurs in the second area of the reinforcement, the reinforcement is deformed due to the collision load, so that the reinforcement moves inward, in the vehicle width direction, of a vehicle body. Herein, since the second area of the reinforcement is configured such that its inward-side end portion is relatively positioned on the outward side, even if the reinforcement moves inward, it can be suppressed that the side sill comes in toward the inside of the cabin. Further, the collision load is absorbed in the process of the inward moving of the reinforcement. Accordingly, the lower structure can properly absorb the collision load, suppressing the situation where the side sill comes in toward the inside of the cabin in the vehicle side collision.

In an embodiment of the present invention, a position, in the vehicle width direction, of the inward-side end portion of the second area of the reinforcement changes according to a distance thereof, in the vehicle longitudinal direction, from the cross members such that the larger the distance is, the more outward, in the vehicle width direction, the position of the inward-side end portion of the second area is.

That is, the collision load causes a situation where the farther position from the cross member moves inward more. According to this embodiment, it can be effectively suppressed that the side sill comes in toward the inside of the cabin.

In another embodiment of the present invention, the inward-side end portion of the second area of the reinforcement is of an arch shape in a plan view such that a central portion thereof is recessed outward, in the vehicle width direction, the most.

That is, in a case where no cross member is provided, the inward-side end portion of the reinforcement tends to be deformed in an arc shape such that the collision point protrudes inward the most in the pole-side collision. According to this embodiment, since the inward-side end portion of the reinforcement is recessed in an inverse manner (direction) relative to the above-described deformation state of the reinforcement in the pole-side collision, it can be effectively suppressed that the side sill comes in toward the inside of the cabin.

In another embodiment of the present invention, the apex point of the arch-shape recessed inward-side end portion corresponds to the central position in the longitudinal direction of the second area R2.

In another embodiment of the present invention, the depth of the apex portion of the recessed portion from the inward-side end portion of the reinforcement is less than 1/2 of the width, in the lateral direction, of the other portion of the reinforcement (30) that is not recessed outwards.

In another embodiment of the present invention, the inward-side end portion of the first area of the reinforcement is configured to extend in the vehicle longitudinal direction along an outward-side end portion, in the vehicle width direction, of the cross member.

According to this embodiment, when the pole-side collision occurs in the first area, the collision load can be efficiently transmitted to the cross member by the reinforcement. Accordingly, the lower structure can absorb the collision load efficiently.

In another embodiment of the present invention, the reinforcement has plural ridgelines extending in the vehicle width direction.

According to this embodiment, the ridgelines of the reinforcement are compressively deformed, so that the collision load can be absorbed. Thereby, even if the inward-side end portion of the reinforcement is relatively positioned on the outward side like the second area, the collision load can be absorbed sufficiently. Accordingly, the lower structure can properly absorb the collision load, suppressing the situation where the side sill comes in toward the inside of the cabin in the vehicle side collision.

In another embodiment of the present invention, the ridgeline portions at the second area are shorter than the portions at the first area.

In another embodiment of the present invention, an outward-side vertical wall portion of the reinforcement is fixed to an outer side-wall portion of the side sill and, at least in the first area, an inward-side vertical wall portion of the reinforcement is fixed to an inner side-wall portion of the side sill (2).

In another embodiment of the present invention, the inward-side vertical wall portion of the reinforcement is separated from and not fixed to the inner side-wall portion of the side sill within the second region, in particular at an inward-side recess portion of the reinforcement.

In another embodiment of the present invention, the plural of cross members includes at least a front-side cross member and a rear-side cross member and the second area is located between said front-side cross member and said rear-side cross member.

In another embodiment of the present invention, each of a portion of the reinforcement which is positioned on the forward side of the front-side cross member and another portion of the reinforcement which is positioned on the rearward side of the rear-side cross member is configured as in the first area.

In another embodiment of the present invention, the reinforcement has a rectangular-shaped closed-cross section and comprises
an upper-side lateral wall portion expanding in the longitudinal and lateral direction and a lower-side lateral wall portion facing the upper-side lateral wall portion in the vertical direction and expanding in the longitudinal and lateral direction;
an outward-side vertical wall portion expanding in the longitudinal and vertical direction and an inward-side vertical wall portion facing the outward-side vertical wall portion in the lateral direction and expanding in the longitudinal and vertical direction.

In another embodiment of the present invention, at the inward-side end portion of said second area, a left-side end portion of the upper-side lateral wall portion and the left-side end portion of the lower-side lateral wall portion are configured to be cutout toward the right side in a lateral direction; and the inward vertical wall portion is configured to be curved in an arch shape toward the right side.

Another aspect of the present invention is directed to a vehicle including a lower structure according to the invention.

As described above, the lower structure of the vehicle of the present invention can properly absorb the collision load, suppressing the situation where the side sill comes in toward the inside of the cabin in the vehicle side collision.

The present invention will become apparent from the following description which refers to the accompanying drawings.

### BRIEF DESCRIPTION OF THE DRAWINGS

FIG. **1** is a plan view showing a vehicle body of a vehicle equipped with a lower structure according to an exemplified embodiment.
FIG. **2** is a perspective view of a right-side side sill, when viewed from an upper right-rear side.
FIG. **3** is a sectional view taken along lone III-III of FIG. **2****.**
FIG. **4** is a sectional view taken along lone IV-IV of FIG. **2****.**
FIG. **5** is a perspective view of a reinforcement.
FIG. **6** is a sectional view taken along lone VI-VI of FIG. **3****.**
FIG. **7** is a schematic diagram showing a shape of the reinforcement in a VII area of FIG. **2****.**
FIG. **8A** is a diagram showing a movement of a conventional reinforcement in a vehicle side collision, which shows a state before the collision.
FIG. **8B** is a diagram showing the movement of the conventional reinforcement in the vehicle side collision, which shows a state after the collision.
FIG. **9A** is a diagram showing a movement of a reinforcement of the present embodiment in the vehicle side collision, which shows a state before the collision.
FIG. **9B** is a diagram showing the movement of the reinforcement of the present embodiment in the vehicle side collision, which shows a state after the collision.
FIG. 10 is a graph showing a relationship between the coming-in amount of an inward-side end portion, in a vehicle width direction, of the vehicle in a second area and the absorption amount of a collision load.

### DETAILED DESCRIPTION OF THE INVENTION

Hereafter, an exemplified embodiment of the present invention will be described specifically referring to the drawings. In the following description, respective positions (directions) of front, rear, left, right, upper and lower relative to a vehicle **1** will be merely referred to as the "front," "rear," "left," "right," "upper" and "lower." A lateral direction corresponds to a vehicle width direction.

### (1) Whole Structure of Lower Portion of Vehicle

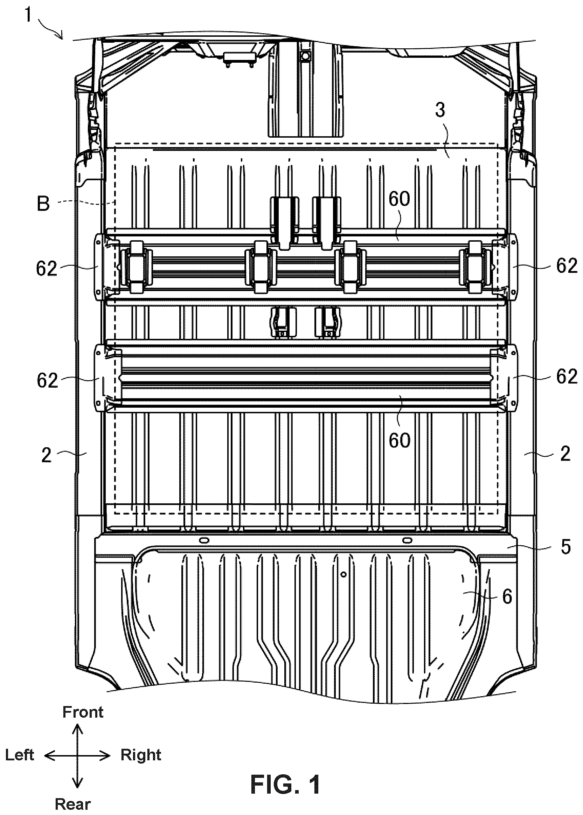

FIG. **1** shows a lower vehicle body of the vehicle **1** provided with a lower structure according to the present embodiment. The vehicle **1** is a four-door type passenger vehicle. In the present embodiment, the vehicle **1** has a laterally-symmetrical vehicle-body structure.

The vehicle **1** comprises a pair of right-and-left side sills **2.** Each of the pair of side sills **2** extends straightly in a longitudinal direction. The side sill **2** has a structure having a closed-cross section, and the closed-cross section extends straightly in the longitudinal direction, which will be specifically described later.

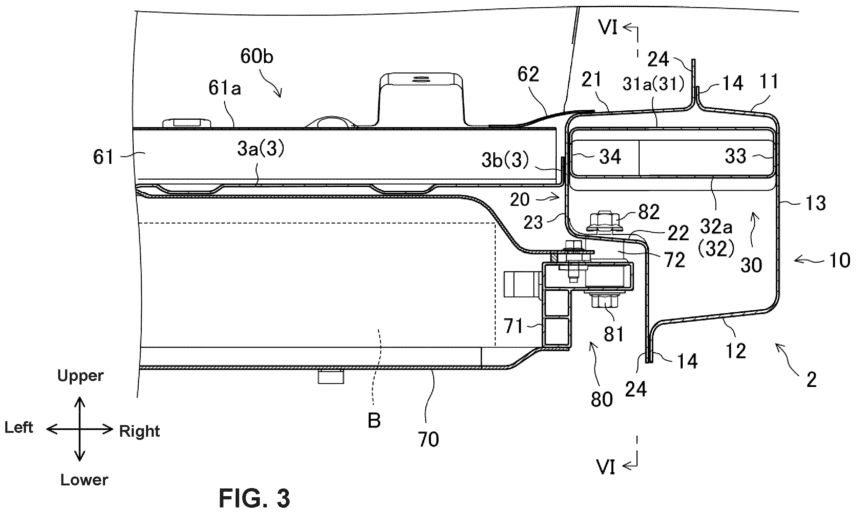

The vehicle **1** comprises a floor panel **3** which forms a floor face of a cabin. The floor panel **3** comprises a floor panel body **3a** (see FIGS. **3** and others) which expands in the vehicle width direction and in the longitudinal direction and floor-panel joint portions **3b** (see FIGS. **3** and others) which are fixed to the side sills **2** by welding. The left-side floor-panel joint portion **3b** is fixedly welded to a right-side portion of the left-side side sill **2.** The right-side floor-panel joint portion **3b** is fixedly welded to a left-side portion of the right-side side sill **2.**

A kick-up portion **5** which rises upward is arranged at a rear end of the floor panel **3.** A rear floor panel **6** expands rearward from the kick-up portion **5.** The rear floor panel **6** forms a floor face of a luggage room mainly.

Two cross members **60** extending in the lateral direction are arranged above the floor panel **3.** The two cross members **60** are aligned such that they are separated from each other in the longitudinal direction. A longitudinal position of the rear-side cross member **60** is the same as that of a center pillar, which is not illustrated. In the flowing description, the cross member **60** positioned on a relatively front side will be referred as a front-side cross member **60a** and the cross member **60** positioned on a relatively rear side will be referred to as a rear-side cross member **60b** in some cases. When these are not differentiated, the generic name of the cross member **60** will be used.

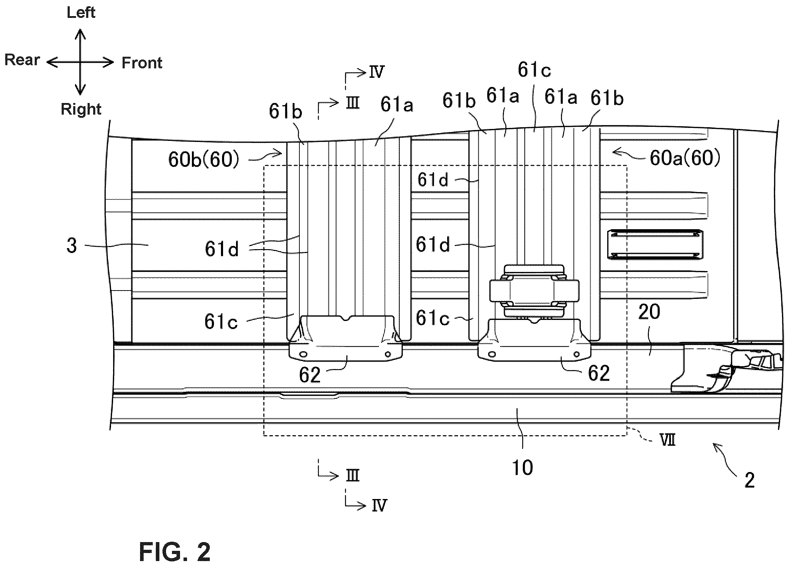

As shown in FIG. **2****,** the cross member **60** includes a cross-member body **61** and brackets **62.** The brackets **62** are fixed to both sides, in the lateral direction, of the cross-member body **61** (the right-side bracket **62** is shown in FIG. **2** only). The left-side bracket **62** is fixed to the left-side side sill **2** by welding, and the right-side bracket **62** is fixed to the right-side side sill **2** by welding. Thereby, the both-side end portions, in the lateral direction, of the cross member **60** are fixed to the side sills **2.** A lower end of the cross-member body **61** is fixed to an upper face of the floor panel **3.**

The cross-member body **61** has a cross section which is of a M-letter shape. The cross-member body **61** comprises two upper face portions **61a,** four side face portions **61b,** and a joint face portion **61c** which is joined to the floor panel **3.** A cross-member ridgeline portion **61d** extending in the lateral direction is formed between the upper face portion **61a** and the side face portion **61b** and also between the joint face portion **61c** and the side face portion **61b.**

As shown in FIG. **3****,** a battery **B** is arranged below the floor panel **3.** The battery **B** is arranged in a state where it is stored in a battery case **70.** The battery **B** is provided in a range which overlaps a roughly whole part of the floor panel **3** in a plan view.

The battery **B** is supported at lower wall portions (inner lower-wall portions **22** described later) of the side sills **2** together with the battery case **70** via support portions **80.** Specifically, a bracket **71** extending outward, in the vehicle width direction, of a vehicle body is fixed to an outward portion, in the vehicle width direction, (to a right-side portion in FIG. **3**) of the battery case **70.** A bolt **81** is inserted into an outward-side portion, in the vehicle width direction, (into a right-side end portion in FIG. **3**) of the bracket **71.** The bolt **81** is supposed to engage with a nut **82** which is fixed to a portion inside the closed-cross section of the inner lower-wall portion **22** of the side sill **2.** The bolt **81** is inserted into the bracket **71** from below and fixed by the nut **82.** Thereby, the battery **B** is supported at the side sills **2** via the battery case **70** and the brackets **71.** The bolt **81** and the nut **82** constitute a support portion **80.** A bush **72** is arranged around the bolt **81** between the bracket **71** and the inner lower-wall portion **22.** The bush **72** is made of a resilient member.

### (2) Side Sill

Hereafter, a structure of the side sill **2** will be described specifically. As described above, since the vehicle-body structure of the vehicle **1** is laterally symmetrical, the structure of the right-side side sill **2** will be described specifically, and specific description of the left-side side sill **2** is omitted here. Further, in the description of the right-side side sill **2,** the right side corresponds to the outward side, in the vehicle width direction, of the vehicle body and the left side corresponds to the inward side, in the vehicle width direction, of the vehicle body.

### (2-1) Outer Panel, Inner Panel

As shown in FIG. **3****,** the side sill **2** includes an outer panel **10** positioned on the right side relatively and an inner panel **20** positioned on the left side relatively. A material of the outer panel **10** and the inner panel **21** is not limited to a particular one, but iron is applicable, for example.

The outer panel **10** has a hat-shaped cross section which is open to the left side. The outer panel **10** comprises an outer upper-wall portion **11** which expands in the longitudinal direction and in the lateral direction, an outer lower-wall portion **12** which is provided to face the outer upper-wall portion **11** in a vertical direction and expands in the longitudinal direction and in the lateral direction, and an outer side-wall portion **13** which connects, in the vertical direction, a right-side end portion of the outer upper-wall portion **11** and a right-side end portion of the outer lower-wall portion **12** and expands in the vertical direction and in the longitudinal direction. A pair of outer flanges **14** extend in the vertical direction from a left-side end portion of the outer upper-wall portion **11** and a left-side wall portion of the outer lower-wall portion **12,** respectively. The outer upper-wall portion **11** is inclined such that it extends obliquely rightward-and-downward. The outer lower-wall portion **12** is inclined such that it extends obliquely rightward-and-upward. The left-side end portion of the outer upper-wall portion **11** is positioned on the right side of the left-side end portion of the outer lower-wall portion **12.**

The inner panel **20** has a hat-shaped cross section which is open to the right side. The inner panel **20** comprises an inner upper-wall portion **21** which expands in the longitudinal direction and in the lateral direction, an inner lower-wall portion **22** which is provided to face the inner upper-wall portion **21** in the vertical direction and expands in the longitudinal direction and in the lateral direction, and an inner side-wall portion **23** which connects, in the vertical direction, a left-side end portion of the inner upper-wall portion **21** and a left-side end portion of the inner lower-wall portion **22** and expands in the vertical direction and in the longitudinal direction. A pair of inner flanges **24** extend in the vertical direction from a right-side end portion of the inner upper-wall portion **21** and a right-side wall portion of the inner lower-wall portion **22,** respectively. The inner upper-wall portion **21** is inclined such that it extends obliquely leftward-and-downward. The inner lower-wall portion **22** extends straightly in the lateral direction. The inner lower-wall portion **22** has an insertion hole of the bolt **81.**

The outer flanges **14** of the outer panel **10** and the inner flanges **24** of the inner panel **20** are provided to overlap each other in a state where their openings face each other in the lateral direction. The outer flanges **14** and the inner flanges **24** are joined by welding. Thereby, the side sill **2** has the structure having the rectangular-shaped closed-cross section which is formed by the outer upper-wall portion **11,** the outer lower-wall portion **12,** the outer side-wall portion **13,** the inner upper-wall portion **21,** the inner lower-wall portion **22,** and the inner side-wall portion **23.**

The floor panel **3** and the cross member **60** are fixed to the inner panel **20.** Specifically, as shown in FIG. **3****,** the floor-panel joint portion **3b** of the floor panel **3** is formed by a right-side end portion of the floor panel body **3a** which is bent upward, and extends along the inner side-wall portion **23** and is joined to a left-side face of the inner side-wall portion **23.** The bracket **62** of the cross member **60** is provided to cover a corner portion between the inner upper-wall portion **21** and the inner side-wall portion **23.** The bracket **62** has a portion for welding which extends continuously along the inner upper-wall portion **21.** This welding portion is joined to the inner upper-wall portion **21.** Herein, FIG. **3** shows a fixation structure of the rear-side cross member **60** and the inner panel **20.** The fixation structure of the front-side cross member **60** and the inner panel **20** are the same as the fixation structure of the rear-side cross member **60** and the inner panel **20.**

### (2-2) Reinforcement

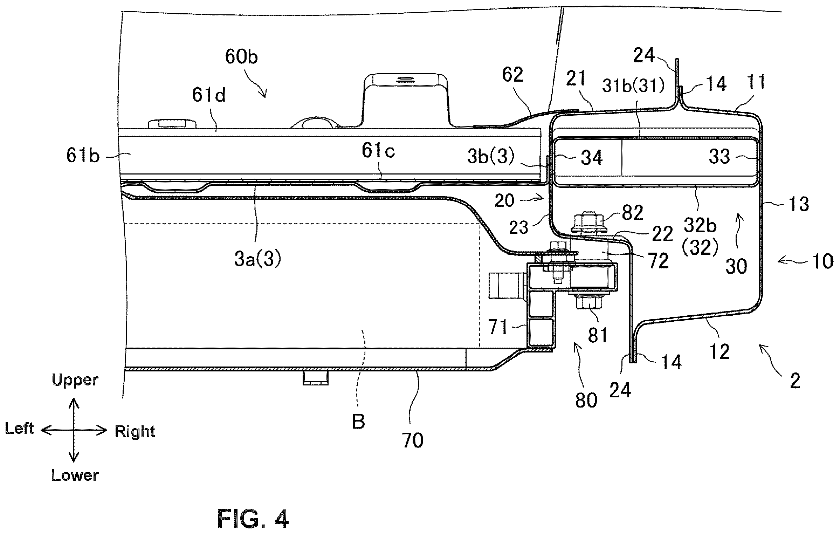

As shown in FIGS. **3** and **4****,** a reinforcement **30** to reinforce the side sill **2** is arranged inside the closed-cross section of the side sill **2.** The reinforcement **30** is formed by pressing of a pipe. The reinforcement **30** extends in the longitudinal direction inside the closed-cross section of the side sill **2.** The material strength of the reinforcement **30** is lower than that of the cross-member body **61.** Herein, the material strength means the strength of a plate itself which constitutes the member. The material strength is a parameter to be determined by the tensional strength and the thickness of the plate, for example. The higher the tensional strength is, the higher the material strength is. Also, the larger the thickness is, the higher the material strength is. The material of the reinforcement **30** is not limited to a particular one, but it is iron, for example.

The reinforcement **30** is arranged over an entire part of the side sill **2.** The reinforcement **30** is seamlessly arranged at a position which corresponds to the cross members **60** and also at an intermediate position between the two cross members **60.** The reinforcement **30** is arranged at a position which overlaps the two cross members **60** in the vertical direction.

The reinforcement **30** has a structure having a rectangular-shaped closed-cross section. The reinforcement **30** includes an upper-side lateral wall portion **31** which is positioned at a relatively upper side and expands in the longitudinal direction and in the lateral direction and a lower-side lateral wall portion **32** which is provided to face the upper-side lateral wall portion **31** in the vertical direction and expands in the longitudinal direction and in the lateral direction. The reinforcement **30** includes an outward-side vertical wall portion **33** which is positioned at a relatively right side and expands in the longitudinal direction and in the vertical direction and an inward-side vertical wall portion **34** which is provided to face the outward-side vertical wall portion **33** in the lateral direction and expands in the longitudinal direction and in the vertical direction. The outward-side vertical wall portion **33** connects, in the vertical direction, a right-side end portion of the upper-side lateral wall portion **31** and a right-side end portion of the lower-side lateral wall portion **32.** The inward-side vertical wall portion **34** connects, in the vertical direction, a left-side end portion of the upper-side lateral wall portion **31** and a left-side end portion of the lower-side lateral wall portion **32.** The upper-side lateral wall portion **31,** the lower-side lateral wall portion **32,** the outward-side vertical wall portion **33,** and the inward-side vertical wall portion **34** are made of a single member and formed integrally seamlessly.

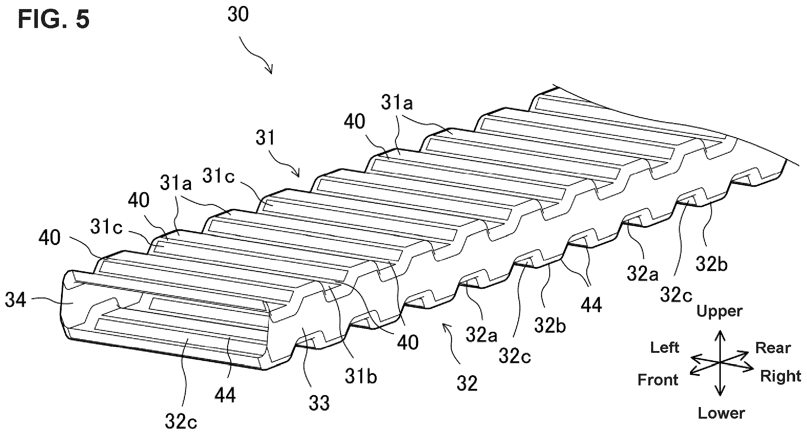

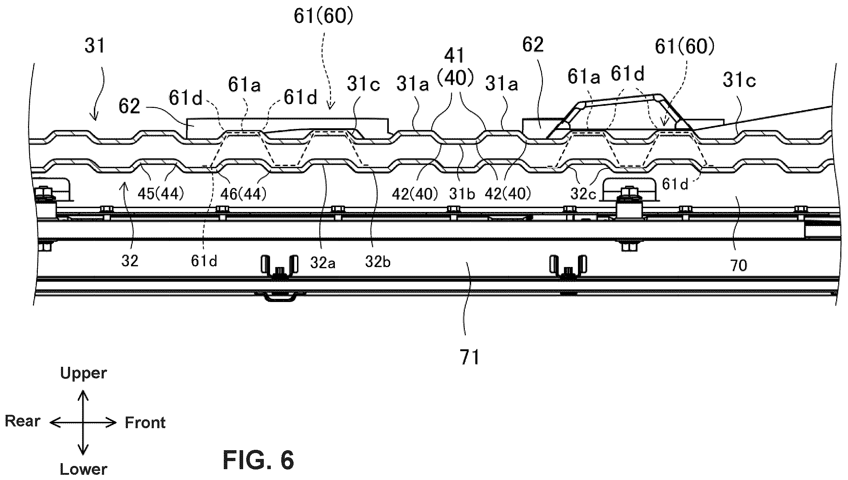

As shown in FIGS. **5** and **6****,** the upper-side lateral wall portion **31** is of an uneven (concave-and-convex) shape when viewed in the lateral direction. Specifically, the upper-side lateral wall portion **31** comprises a first upper-face portion **31a** which is relatively positioned at an upper side and expands in the longitudinal direction and in the lateral direction, a second upper-face portion **31b** which is relatively positioned at a lower side and expands in the longitudinal direction and in the lateral direction, and an upper-side connection portion **31c** which connects, in the vertical direction, an end portion, in the longitudinal direction, of the first upper-face portion **31a** and an end portion, in the longitudinal direction, of the second upper-face portion **31b.** The first upper-face portion **31a** and the second upper-face portion **31b** are aligned in the longitudinal direction alternately. The upper-side connection portion **31c** to connect the front-side end portion of the first upper-face portion **31a** and the rear-side end portion of the second upper-face portion **31b** is inclined such that it expands obliquely forward-and-downward. The upper-side connection portion **31c** to connect the rear-side end portion of the first upper-face portion **31a** and the front-side end portion of the second upper-face portion **31b** is inclined such that it expands obliquely forward-and-upward. The width, in the longitudinal direction, of the first upper-face portion **31a** is the same as the width, in the longitudinal direction, of the second upper-face portion **31b.** The width, in the longitudinal direction, of the first upper-face portion **31a** and the second upper-face portion **31b** is narrower than the width, in the longitudinal direction, of the cross member **60** and the minimum of a distance between the front-side cross member **60a** and the rear-side cross member **60b.** Specifically, the width, in the longitudinal direction, of the first upper-face portion **31a** and the second upper-face portion **31b** is narrower than a half of the width, in the longitudinal direction, of the cross member **60** and also narrower than a half of the minimum of the distance between the front-side cross member **60a** and the rear-side cross member **60b.** The length, in the vertical direction, of the upper-side connection portion **31c,** i.e., the distance, in the vertical direction, of the first upper-face portion **31a** and the second upper-face portion **31b** is about 1/4 of the distance between the upper-side lateral wall portion **31** and the lower-side lateral wall portion **32.**

Upper-side ridgeline portions **40** extending in the lateral direction are formed between the first upper-face portion **31a** and the upper-side connection portion **31c** and between the second upper-face portion **31b** and the upper-side connection portion **31c,** respectively. The four upper-side ridgeline portions **40** are formed by one-cycle uneven shape comprising the first upper-face portion **31a,** the second upper-face portion **31b,** and the upper-side connection portions **31c.** The cycle-number of the uneven shape multiplied by four equals the number of the upper-side ridgeline portions **40** which are formed at the upper-side lateral wall portion **31** as a whole.

As shown in FIG. **6****,** the vertical position of the first upper-face portion **31a** is the same as the vertical position of the upper face portion **61a** of the cross member **60.** Accordingly, the upper-side ridgeline portion **40** has the same vertical position as the upper-side cross-member ridgeline portion **61d.** Further, the upper-side ridgeline portion **40** has the same longitudinal position as the upper-side cross-member ridgeline portion **61d.**

As shown in FIGS. **5** and **6****,** the lower-side lateral wall portion **32** is of an uneven (concave-and-convex) shape when viewed in the lateral direction. Specifically, the lower-side lateral wall portion **32** comprises a first lower-face portion **32a** which is relatively positioned at an upper side and expands in the longitudinal direction and in the lateral direction, a second lower-face portion **32b** which is relatively positioned at a lower side and expands in the longitudinal direction and in the lateral direction, and a lower-side connection portion **32c** which connects, in the vertical direction, an end portion, in the longitudinal direction, of the first lower-face portion **32a** and an end portion, in the longitudinal direction, of the second lower-face portion **32b.** The first lower-face portion **32a** and the second lower-face portion **32b** are aligned in the longitudinal direction alternately. The lower-side connection portion **32c** to connect the front-side end portion of the first lower-face portion **32a** and the rear-side end portion of the second lower-face portion **32b** is inclined such that it expands obliquely forward-and-downward. The lower-side connection portion **32c** to connect the rear-side end portion of the first lower-face portion **32a** and the front-side end portion of the second lower-face portion **32b** is inclined such that it expands obliquely forward-and-upward. The width, in the longitudinal direction, of the first lower-face portion **32a** is the same as the width, in the longitudinal direction, of the second lower-face portion **32b.** The width, in the longitudinal direction, of the first lower-face portion **32a** and the second lower-face portion **32b** is the same as the width, in the longitudinal direction, of the first upper-face portion **31a** and the second upper-face portion **31b.** The vertical length of the lower-side connection portion **32c,** i.e., the distance, in the vertical direction, between the first lower-face portion **32a** and the second lower-face portion **32b** is the same as the vertical distance between the first upper-face portion **31a** and the second upper-face portion **31b.**

Lower-side ridgeline portions **44** extending in the lateral direction are formed between the first lower-face portion **32a** and the lower-side connection portion **32c** and between the second lower-face portion **32b** and the lower-side connection portion **32c,** respectively. The four lower-side ridgeline portions **44** are formed by one-cycle uneven shape comprising the first lower-face portion **32a,** the second lower-face portion **32b,** and the lower-side connection portions **32c.** The cycle-number of the uneven shape multiplied by four equals the number of the lower-side ridgeline portions **44** which are formed at the lower-side lateral wall portion **32** as a whole.

As shown in FIG. **4****,** the vertical position of the second lower-face portion **32b** is the same as the vertical position of the floor panel body **3a.** Accordingly, the vertical position of the lower-side ridgeline **44** is the same as the vertical position of the floor panel body **3a.** Further, the vertical position of the second lower-face portion **32b** is slightly below the joint face portion **61c** of the cross-member body **61.** Accordingly, the lower-side ridgeline portion **44** is slightly below the lower-side cross-member ridgeline portion **61d.**

As shown in FIG. **6****,** the longitudinal position of the first upper-face portion **31a** is the same as the longitudinal position of the first lower-face portion **32a.** The longitudinal position of the second upper-face portion **31b** is the same as the longitudinal position of the second lower-face portion **32b.** The longitudinal position of the upper-side ridgeline portion **40** is the same as the longitudinal position of the lower-side ridgeline portion **44.** Further, the vertical distance between the first upper-face portion **31a** and the first lower-face portion **32a,** the vertical distance between the second upper-face portion **31b** and the second lower-face portion **32b,** and the vertical distance between the upper-side connection portion **31c** and the lower-side connection portion **32c** are the same.

The outward-side vertical wall portion **33** and the inward-side vertical wall portion **34** have the shape corresponding to the uneven shape of the upper-side lateral wall portion **31** and the lower-side lateral wall portion **32.**

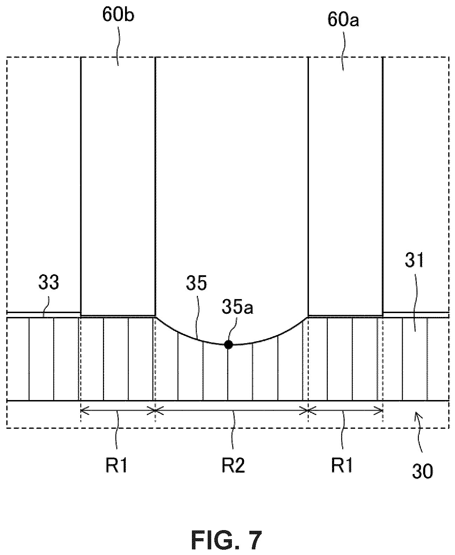

As shown in FIG. **7****,** the reinforcement **30** is configured such that a portion thereof between the front-side cross member **60a** and the rear-side cross member **60b** and another portion thereof which corresponds to the front-side cross member **60a** and the rear-side cross member **60b** have different shapes from each other. Specifically, when an area which overlaps, in the longitudinal direction, the front-side cross member **60a** or the rear-side cross member **60b** is defined as a first area **R1**, and another area which is positioned, in the longitudinal direction, between the front-side cross member **60a** and the rear-side cross member **60b** is defined as a second area **R2,** a left-side end portion of the second area **R2** is positioned on the outward side, in the vehicle width direction, of a left-side end portion of the first area **R1.** Specifically, at the second area **R2,** the left-side end portion of the reinforcement **30** has an arch-shaped rightward recess portion **35.** Herein, a position, in the vehicle width direction, of the left-side end portion of the inward-side recess portion **35** changes according to a distance thereof, in the vehicle longitudinal direction, from the cross members **60** such that the larger said distance is, the more rightward the above-described position of the left-side end portion of the inward-side recess portion **35** is. Meanwhile, at the first area **R1**, the left-side end portion of the reinforcement **30** extends in the longitudinal direction along the right-side end portion of the cross member **60.**

The inward-side recess portion **35** has an apex portion **35a** which is located at a central position, in the longitudinal direction, of the second area **R2** and at the rightmost position in the vehicle width direction. The shape of the inward-side recess portion **35** is longitudinally symmetrical relative to the apex portion **35a.** The depth of the apex portion **35a** of the inward-side recess portion **35** from the left-side end portion of the reinforcement **30** is less than 1/2 of the width, in the lateral direction, of the other portion of the reinforcement **30** than the inward-side recess portion **35.** At the inward-side recess portion **35,** the left-side end portion of the upper-side lateral wall portion **31** and the left-side end portion of the lower-side lateral wall portion **32** are configured to be cutout toward the right side. At the inward-side recess portion **35,** the inward vertical wall portion **34** is configured to be curved in the arch shape toward the right side. At the inward-side recess portion **35,** the inward vertical wall portion **34** is separated, in the lateral direction, from the floor panel **3.** Herein, in FIG. 7, the lower-side lateral wall portion **32** is not viewed because of its overlapping the upper-side lateral wall portion **31.**

At the second area **R2,** the right-side end portion of the upper-side lateral wall portion **31,** the right-side end portion of the lower-side lateral wall portion **32,** and the outward-side vertical wall portion **33** are located at the same position in the lateral direction. At the second area **R2,** the right-side end portion of the upper-side lateral wall portion **31,** the right-side end portion of the lower-side lateral wall portion **32,** and the outward-side vertical wall portion **33** are located at the same position, in the lateral direction, as the right-side end portion of the upper-side lateral wall portion **31,** the right-side end portion of the lower-side lateral wall portion **32,** and the outward-side vertical wall portion **33** at the first area **R1.** That is, the right-side end portion of the reinforcement **30** has the same position, in the lateral direction, of the vehicle body both at the first area **R1** and the second area **R2.**

The upper-side ridgeline portion **40** and the lower-side ridgeline portion **44** at the second area **R2** is shorter than these portions **40, 44** at the first area **R1.** Herein, in FIG. 7, the lower-side ridgeline portion **44** is not viewed because of its overlapping the upper-side lateral wall portion **31.**

In the present embodiment, each of a portion of the reinforcement **30** which is positioned on the forward side of the front-side cross member **60a** and another portion of the reinforcement **30** which is positioned on the rearward side of the rear-side cross member **60b** is configured such that its both-side end portions have the same positions in the vehicle width direction, which is similar to the area **R1**.

The outward-side vertical wall portion **33** is fixed to the outer side-wall portion **13** and the inward-side vertical wall portion **34** is fixed to the inner side-wall portion **23,** whereby the reinforcement **30** is fixed to the side sill **2.** The inward-side vertical wall portion **34** is separated from the inner side-wall portion **23** at the inward-side recess portion **35,** and is not fixed to the inner side-wall portion **23.** A fixation method of the outward-side vertical wall portion **33** and the outer side-wall portion **13** and a fixation method of the inward-side vertical wall portion **34** and the inner side-wall portion **23** are not limited to a particular one, but welding, adhesion by an adhesive agent, bolt fastening or the like are applicable, for example.

An area of the closed-cross section which is formed by the upper-side lateral wall portion **31,** the lower-side lateral wall portion **32,** the outward-side vertical wall portion **33,** and the inward-side vertical wall portion **34** does not change in the longitudinal direction.

### (3) Movement in Vehicle Side Collision

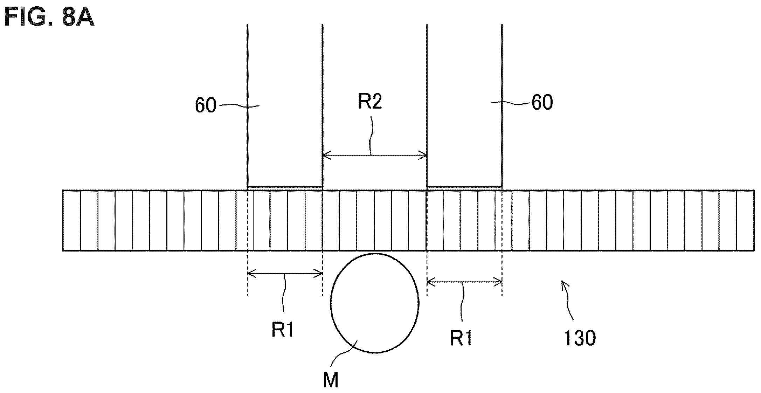

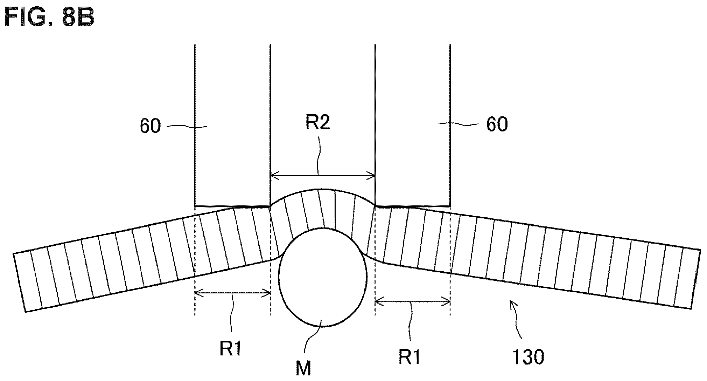

FIGS. **8A** and **8B** show a deformation movement of a conventional reinforcement **130** in the pole-side collision in a case where respective positions, in the lateral direction, of respective left-side end portions of a first area **R1** and a second area **R2** of the reinforcement **130.** FIG. **8A** shows a state before the collision and FIG. **8B** shows a state after the collision.

It is assumed here that the pole-side collision of the object **M** occurs at a portion of the second area **R2** of the reinforcement **130.** The longitudinal position of the collision point is a central position of the second area **R2.**

As shown in FIG. **8B****,** it is suppressed by the cross member **60** that a portion of the first area **R1** of the reinforcement **130** comes in toward the inside of the cabin. Also, a front-side portion or a rear-side portion of the reinforcement **130** which is positioned on the forward side or the rearward side of the second area **R2** are deformed toward the right side. Accordingly, it is suppressed that the other portion of the reinforcement **130** than the second area **R2** moves in toward the inside of the cabin.

Meanwhile, the second area **R2** of the reinforcement **130** moves in toward the inside of the cabin due to the collision load. In particular, since a reaction force is hardly applied to the second area **R2,** the left-side end portion of the reinforcement **130** is deformed toward the inside of the cabin, so that this deformed portion is pushed into the cabin. The side sill **2** is pushed into the cabin together with the reinforcement **130.** Accordingly, the side sill **2** comes into the cabin as well. This may cause the cabin inside area to be narrowed. Moreover, there is a concern that the battery case **70** and the battery **B** may be broken due to the collision load transmitted thereto.

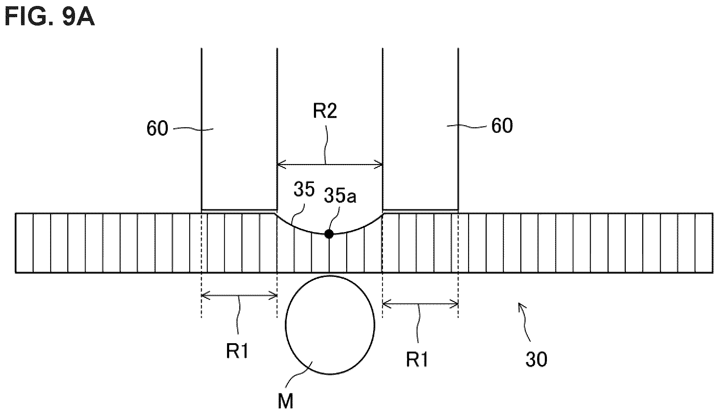

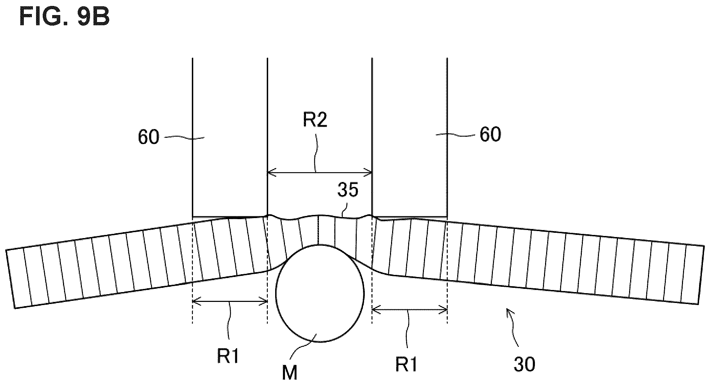

FIGS. **9A** and **9B** show a deformation movement of the reinforcement **30** of the present embodiment in the pole-side collision. FIG. **9A** shows a state before the collision and FIG. **9B** shows a state after the collision.

As shown in FIG. **9A****,** it is assumed that the collision object **M** has the pole-side collision at a portion of the second area **R2** of the reinforcement **30.** Herein, the longitudinal position of the collision point is the central position between the front-side cross member **60a** and the rear-side cross member **60b.**

As shown in FIG. **9B****,** since the portion of the first area **R1** of the reinforcement **30** does not have the inward-side recess portion **35** and its left-side end portion has the uniform position in the lateral direction, the coming-in toward the inside of the first area **R1** is suppressed by the cross member **60.** Further, the front-side portion or the rear-side portion of the reinforcement **30** which is positioned on the forward side or the rearward side of the second area **R2** are deformed toward the right side by the reaction force from the cross member **60.** Accordingly, it is suppressed that the other portion of the reinforcement **30** than the second area **R2** comes in toward the inside of the cabin.

The portion of the second area **R2** of the reinforcement **30** moves toward the inside of the cabin due to the collision load. In the present embodiment, since the inward-side recess portion **35** is formed at the second area **R2,** it is suppressed that the reinforcement **30** comes in toward the inside of the cabin. Specifically, the inward-side recess portion **35** is deformed by the collision load such that it protrudes toward the inside of the cabin. Since the inward-side recess portion **35** is recessed to the right in the state before the collision, the left-side end portion of the reinforcement **30** may hardly come in toward the inside of the cabin even if the deformation of the inward-side recess portion **35** occurs. Accordingly, the structure of the present embodiment can absorb the collision load, suppressing the situation where the side sill **2** comes in toward the inside of the cabin.

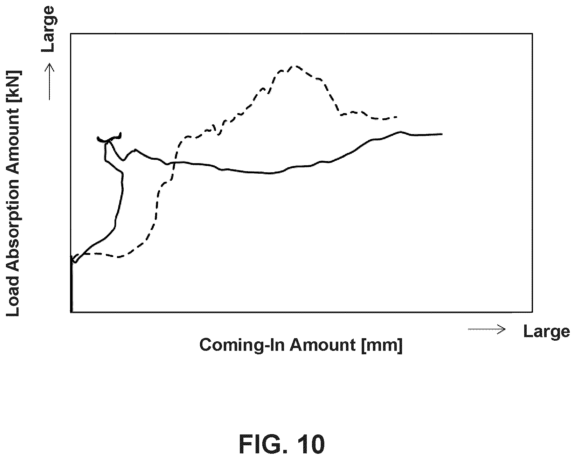

FIG. **10** shows calculation results of a simulation of the coming-in amount of the side sill **2** and the collision load which can be absorbed by this coming-in amount in the pole-side collision against the portion of the second area **R2.** A broken line shows a case of the reinforcement **130** without the inward-side recess portion **35** shown in FIGS. **8A** and **8B****,** and a solid line shows the present embodiment's case of the reinforcement **30** with the inward-side recess portion **35** shown in FIGS. **9A** and **9B****.** Herein, the simulation was conducted based on a condition where the floor panel **3** does not exist.

As shown in FIG. **10****,** it is found that in a case where the inward-side recess portion **35** does not exist, the collision load is absorbed first and then the coming-in amount increases without increasing of its absorption amount, and subsequently the absorption amount of the collision load increases as the coming-in amount increases. This is because the reinforcement **130** moves in toward the inside of the cabin without the deformation of the reinforcement **130,** and then the reinforcement **130** is compressively deformed, so that the collision load is absorbed.

Meanwhile, it is found that in a case where the inward-side recess portion **35** exists, the collision load is absorbed first and then the absorption amount of the collision load increases with little increase of the coming-in amount of the side sill **2,** and subsequently the coming-in amount increases with little increase of the absorption amount of the collision load. This is because the inward-side recess portion **35** exists, so that the collision load can be absorbed by the deformation of the reinforcement **30** without any contact of the reinforcement **30** with the inner panel **20** of the side sill **2.** Herein, in a case where the inward-side recess portion **35** exists, since the width, in the lateral direction, of the second area **R2** of the reinforcement **30** decreases, the maximum of the load which can be absorbed by the side sill **2** itself becomes smaller than the case where the inward-side recess portion **35** does not exist. However, in the case where the reinforcement **30** becomes the state shown in FIG. **9B****,** the collision load is absorbed sufficiently, so that the rest of the load can be properly received at the floor panel **3** and the like. In particular, since the relatively-large load is absorbed by the reinforcement **30,** the floor panel 3 is hardly deformed even if the rest of the collision load is received at the floor panel **3.** Accordingly, even if the gross absorption amount of the collision load by means of the side sill **2** becomes small, there is no problem in particular.

### (4) Effects of Embodiment

In the present embodiment, the reinforcement **30** arranged inside the side sill **2** includes the first area **R1** which overlaps, in the vehicle longitudinal direction, the cross members **6** and the second area **R2** which is positioned, in the vehicle longitudinal direction, between the cross members **60,** and the inward-side end portion, in the vehicle width direction, of the second area **R2** of the reinforcement **30** is positioned on the outward side, in the vehicle width direction, of the inward-side end portion, in the vehicle width direction, of the first area **R1** of the reinforcement **30.** Herein, when the pole-side collision occurs in the first area **R1** of the reinforcement **30,** the collision load can be efficiently transmitted to the cross members **60** by the reinforcement **30.** Meanwhile, when the pole-side collision occurs in the second area **R2** of the reinforcement **30,** the reinforcement **30** is deformed due to the collision load, so that the reinforcement **30** moves inward, in the vehicle width direction, of the vehicle body. Herein, since the second area **R2** of the reinforcement **30** is configured such that its inward-side end portion is relatively positioned on the outward side, even if the reinforcement **30** moves inward, it can be suppressed that the side sill **2** comes in toward the inside of the cabin. Further, the collision load is absorbed in the process of the inward moving of the reinforcement **30.** Accordingly, the present embodiment can properly absorb the collision load, suppressing the situation where the side sill **2** comes in toward the inside of the cabin in the vehicle side collision.

In particular, in the present embodiment, the battery case **70** storing the battery **B** is arranged below the floor panel **3.** Since it is suppressed that the side sill **2** moves in toward the inside of the cabin, any breakage of the battery case **70** and the battery **B** can be suppressed.

Further, in the present embodiment, the respective outward-side end portions of the first and second areas **R1**, **R2** have the same positions, in the vehicle width direction, thereof. Accordingly, it is unnecessary to make the width, in the vehicle width direction, of the side sill **2** large. The present embodiment can effectively absorb the collision load, suppressing the weight increase of the vehicle **1.**

In the present embodiment, the position, in the vehicle width direction, of the inward-side end portion of the second area **R2** of the reinforcement **30** changes according to the distance thereof, in the vehicle longitudinal direction, from the cross members **30** such that the larger the distance is, the more outward, in the vehicle width direction, the position of the inward-side end portion of the second area **R2** is. Accordingly, it can be effectively suppressed that the side sill comes in toward the inside of the cabin.

In the present embodiment, the inward-side end portion of the second area **R2** of the reinforcement **30** is of the arch shape in the plan view such that the central portion thereof is recessed outward, in the vehicle width direction, the most. That is, in a case where the cross member **60** is not provided, the inward-side end portion of the reinforcement **30** tends to be deformed in the arc shape such that the collision point protrudes inward the most in the pole-side collision. According to the present embodiment, since the inward-side end portion of the reinforcement **30** is recessed in an inverse manner (direction) relative to the above-described deformation state of the reinforcement **30** in the pole-side collision, it can be effectively suppressed that the side sill **2** comes in toward the inside of the cabin.

In the present embodiment, the inward-side end portion of the first area **R1** of the reinforcement **30** is configured to extend in the vehicle longitudinal direction along the outward-side end portion, in the vehicle width direction, of the cross member **30.** When the pole-side collision occurs in the first area **R1**, the collision load can be efficiently transmitted to the cross member **60** by the reinforcement **30.** Accordingly, the present embodiment can absorb the collision load efficiently.

In the present embodiment, the reinforcement **30** has the plural upper-side and lower-side ridgelines **40, 44** extending in the vehicle width direction. In the pole-side collision, these ridgelines **40, 44** are compressively deformed, so that the collision load can be absorbed. Thereby, even if the inward-side end portion of the reinforcement **30** is relatively positioned on the outward side like the second area **R2,** the collision load can be absorbed sufficiently. Accordingly, the present embodiment can properly absorb the collision load, suppressing the situation where the side sill **2** comes in toward the inside of the cabin in the vehicle side collision.

### (Other Embodiments)

The present invention is not limited to the above-described embodiment, and any modifications are applicable within a scope of the claims.

Each position, in the vehicle width direction, of the respective inward-side end portions of the portion of the reinforcement **30** which is positioned on the forward side of the front-side cross member **60a** and the other portion of the reinforcement **30** which is positioned on the rearward side of the rear-side cross member **60b** is the same as the position of the inward-side end portion of the first area **R1** in the above-described embodiment. However, the above-described position may be located on the outward side compared to the first area **R1**. In this case, each position, in the vehicle width direction, of the respective inward-side end portions of the front-side portion of the reinforcement **30** which is positioned on the forward side of the front-side cross member **60a** and the rear-side portion of the reinforcement **30** which is positioned on the rearward side of the rear-side cross member **60b** may be preferably configured to change according to the distance from the front-side cross member **60a** and the distance from the rear-side cross member **60b** such that the larger the distance is, the more outward, in the vehicle width direction, the position of the inward-side end portion is.

The inward-side recess portion **35** of the above-described embodiment has the arch shape such that its central portion is recessed outward, in the vehicle width direction, the most. However, the inward-side recess portion **35** may be configured such that the position, in the vehicle width direction, of its inward-side end portion does not change regardless of the distance from the cross members **60.** Alternatively, a V-letter shape may be applied in place of the above-described arch shape.

The above-described embodiments merely exemplify the lower structure of the vehicle according to the present invention, and therefore the present invention is not limited by these embodiments. Any modifications which are specified in the claims and also construed under the doctrine of equivalents should be within the scope of the present claims.

The present invention described above is useful as the lower structure of the vehicle.

## Claims

1. A lower structure of a vehicle (1), comprising:
a pair of right-and-left side sills (2) extending in a vehicle longitudinal direction and having a closed-cross section;
plural cross members (60) extending in a vehicle width direction between the pair of side sills (2) and provided to be separated from each other in the vehicle longitudinal direction; and
a reinforcement (30) extending in the vehicle longitudinal direction inside the closed-cross section of each of the pair of side sills (2) and reinforcing the side sill (2), a position, in a vertical direction, of which overlaps said cross members (60),
wherein said reinforcement (30) includes a first area (R1) which overlaps, in the vehicle longitudinal direction, said cross members (60) and **characterised in that** a second area (R2) which is positioned, in the vehicle longitudinal direction, between the cross members (60), and an inward-side end portion, in the vehicle width direction, of said second area (R2) of the reinforcement (30) is positioned on an outward side, in the vehicle width direction, of an inward-side end portion, in the vehicle width direction, of said first area (R1) of the reinforcement (30).

2. The lower structure of the vehicle (1) of claim 1, wherein a position, in the vehicle width direction, of said inward-side end portion of the second area (R2) of the reinforcement (30) changes according to a distance thereof, in the vehicle longitudinal direction, from said cross members (60) such that the larger said distance is, the more outward, in the vehicle width direction, said position of the inward-side end portion of the second area (R2) of the reinforcement (30) is.

3. The lower structure of the vehicle (1) of claim 2, wherein said inward-side end portion of the second area (R2) of the reinforcement (30) is of an arch shape in a plan view such that a central portion thereof is recessed outward, in the vehicle width direction, the most.

4. The lower structure of the vehicle (1) according to claim 3, wherein the apex point (35a) of the recessed inward-side end portion (35) corresponds to the central position in the longitudinal direction of the second area (R2).

5. The lower structure of the vehicle (1) according to claim 4, wherein the depth of the apex portion (35a) of the inward-side recess portion (35) from the inward-side end portion of the reinforcement (30) is less than 1/2 of the width, in the lateral direction, of the other portion of the reinforcement (30) than the inward-side recess portion (35).

6. The lower structure of the vehicle (1) of any of the preceding claims, wherein said inward-side end portion of the first area (R1) of the reinforcement (30) is configured to extend in the vehicle longitudinal direction along an outward-side end portion, in the vehicle width direction, of said cross member (60).

7. The lower structure of the vehicle (1) of any of the preceding claims, wherein said reinforcement (30) has plural ridgelines (40, 44) extending in the vehicle width direction.

8. The lower structure of the vehicle (1) according to claim 7, wherein the ridgeline portions (40, 44) at the second area (R2) are shorter than these portions (40, 44) at the first area (R1).

9. The lower structure of the vehicle (1) according to any of the preceding claims, wherein an outward-side vertical wall portion (33) of the reinforcement (30) is fixed to an outer side-wall portion (13) of the side sill (2) and, at least in the first area (R1), an inward-side vertical wall portion (34) of the reinforcement (30) is fixed to an inner side-wall portion (23) of the side sill (2).

10. The lower structure of the vehicle (1) of claim 9, wherein the inward-side vertical wall portion (34) of the reinforcement (30) is separated from and not fixed to the inner side-wall portion (23) of the side sill (2) within the second region (R2), in particular at an inward-side recess portion (35) of the reinforcement (30).

11. The lower structure of the vehicle (1) of any of the preceding claims, wherein the plural of cross members (60) includes at least a front-side cross member (60a) and a rear-side cross member (60b) and the second area (R2) is located between said front-side cross member (60a) and said rear-side cross member (60b).

12. The lower structure of the vehicle (1) of claim 11, wherein each of a portion of the reinforcement (30) which is positioned on the forward side of the front-side cross member (60a) and another portion of the reinforcement (30) which is positioned on the rearward side of the rear-side cross member (60b) is configured as in the first area (R1).

13. The lower structure of the vehicle (1) of any of the preceding claims, wherein the reinforcement (30) has a rectangular-shaped closed-cross section and comprises
an upper-side lateral wall portion (31) expanding in the longitudinal and lateral direction and a lower-side lateral wall portion (32) facing the upper-side lateral wall portion (31) in the vertical direction and expanding in the longitudinal and lateral direction;
an outward-side vertical wall portion (33) expanding in the longitudinal and vertical direction and an inward-side vertical wall portion (34) facing the outward-side vertical wall portion (33) in the lateral direction and expanding in the longitudinal and vertical direction.

14. The lower structure of the vehicle (1) of claim 13, wherein, at the inward-side end portion of said second area (R2), a left-side end portion of the upper-side lateral wall portion (31) and the left-side end portion of the lower-side lateral wall portion (32) are configured to be cutout toward the right side in a lateral direction; and the inward vertical wall portion (34) is configured to be curved in an arch shape toward the right side.

15. A vehicle (1) including a lower structure according to any of the preceding claims.

## Patentansprüche

1. Eine Unterstruktur eines Fahrzeugs (1), umfassend:
ein Paar rechter und linker Seitenschweller (2), die sich in einer Fahrzeuglängsrichtung erstrecken und einen geschlossenen Querschnitt aufweisen;
mehrere Querträger (60), die sich in einer Fahrzeugbreitenrichtung zwischen dem Paar von Seitenschwellern (2) erstrecken und so vorgesehen sind, dass sie in der Fahrzeuglängsrichtung voneinander getrennt sind; und
eine Verstärkung (30), die sich in der Fahrzeuglängsrichtung innerhalb des geschlossenen Querschnitts jedes des Paars von Seitenschwellern (2) erstreckt und den Seitenschweller (2) verstärkt, wovon eine Position in einer vertikalen Richtung die Querträger (60) überlappt,
wobei die Verstärkung (30) einen ersten Bereich (R1) einschließt, welcher in der Fahrzeuglängsrichtung die Querträger (60) überlappt, und **dadurch gekennzeichnet, dass** ein zweiter Bereich (R2), welcher in der Fahrzeuglängsrichtung zwischen den Querträgern (60) positioniert ist, und ein innenseitiger Endabschnitt in der Fahrzeugbreitenrichtung des zweiten Bereichs (R2) der Verstärkung (30) auf einer Außenseite in der Fahrzeugbreitenrichtung eines innenseitigen Endabschnitts in der Fahrzeugbreitenrichtung des ersten Bereichs (R1) der Verstärkung (30) positioniert ist.

2. Unterstruktur des Fahrzeugs (1) nach Anspruch 1, wobei sich eine Position in der Fahrzeugbreitenrichtung des innenseitigen Endabschnitts des zweiten Bereichs (R2) der Verstärkung (30) gemäß einem Abstand desselben in der Fahrzeuglängsrichtung von den Querträgern (60) derart ändert, dass, je größer der Abstand ist, die Position des innenseitigen Endabschnitts des zweiten Bereichs (R2) der Verstärkung (30) umso weiter außen in der Fahrzeugbreitenrichtung ist.

3. Unterstruktur des Fahrzeugs (1) nach Anspruch 2, wobei der innenseitige Endabschnitt des zweiten Bereichs (R2) der Verstärkung (30) in einer Draufsicht von einer Bogenform ist, derart, dass ein Mittelabschnitt desselben in der Fahrzeugbreitenrichtung am weitesten nach außen ausgespart ist.

4. Unterstruktur des Fahrzeugs (1) nach Anspruch 3, wobei der Scheitelpunkt (35a) des ausgesparten innenseitigen Endabschnitts (35) der Mittelposition in der Längsrichtung des zweiten Bereichs (R2) entspricht.

5. Unterstruktur des Fahrzeugs (1) nach Anspruch 4, wobei die Tiefe des Scheitelabschnitts (35a) des innenseitigen Aussparungsabschnitts (35) von dem innenseitigen Endabschnitt der Verstärkung (30) weniger als 1/2 der Breite in der Querrichtung des anderen Abschnitts der Verstärkung (30) als des innenseitigen Aussparungsabschnitts (35) ist.

6. Unterstruktur des Fahrzeugs (1) nach einem der vorhergehenden Ansprüche, wobei der innenseitige Endabschnitt des ersten Bereichs (R1) der Verstärkung (30) dazu eingerichtet ist, sich in der Fahrzeuglängsrichtung entlang eines außenseitigen Endabschnitts in der Fahrzeugbreitenrichtung des Querträgers (60) zu erstrecken.

7. Unterstruktur des Fahrzeugs (1) nach einem der vorhergehenden Ansprüche, wobei die Verstärkung (30) mehrere Gratlinien (40, 44) aufweist, die sich in der Fahrzeugbreitenrichtung erstrecken.

8. The lower structure of the vehicle (1) according to claim 7, wherein the ridgeline portions (40, 44) at the second area (R2) are shorter than these portions (40, 44) at the first area (R1).

9. Unterstruktur des Fahrzeugs (1) nach einem der vorhergehenden Ansprüche, wobei ein außenseitiger vertikaler Wandabschnitt (33) der Verstärkung (30) an einem äußeren Seitenwandabschnitt (13) des Seitenschwellers (2) befestigt ist und, zumindest in dem ersten Bereich (R1), ein innenseitiger vertikaler Wandabschnitt (34) der Verstärkung (30) an einem inneren Seitenwandabschnitt (23) des Seitenschwellers (2) befestigt ist.

10. Unterstruktur des Fahrzeugs (1) nach Anspruch 9, wobei der innenseitige vertikale Wandabschnitt (34) der Verstärkung (30) innerhalb der zweiten Region (R2), insbesondere an einem innenseitigen Aussparungsabschnitt (35) der Verstärkung (30), von dem inneren Seitenwandabschnitt (23) des Seitenschwellers (2) getrennt und nicht an diesem befestigt ist.

11. Unterstruktur des Fahrzeugs (1) nach einem der vorhergehenden Ansprüche, wobei die mehreren Querträger (60) zumindest einen vorderseitigen Querträger (60a) und einen rückseitigen Querträger (60b) einschließen und der zweite Bereich (R2) zwischen dem vorderseitigen Querträger (60a) und dem rückseitigen Querträger (60b) angeordnet ist.

12. Unterstruktur des Fahrzeugs (1) nach Anspruch 11, wobei jeder von einem Abschnitt der Verstärkung (30), welcher auf der Vorderseite des vorderseitigen Querträgers (60a) positioniert ist, und einem anderen Abschnitt der Verstärkung (30), welcher auf der Rückseite des rückseitigen Querträgers (60b) positioniert ist, wie in dem ersten Bereich (R1) eingerichtet ist.

13. Unterstruktur des Fahrzeugs (1) nach einem der vorhergehenden Ansprüche, wobei die Verstärkung (30) einen rechteckig geformten geschlossenen Querschnitt aufweist und umfasst
einen oberseitigen seitlichen Wandabschnitt (31), der sich in der Längs- und Querrichtung erstreckt, und einen unterseitigen seitlichen Wandabschnitt (32), der dem oberseitigen seitlichen Wandabschnitt (31) in der vertikalen Richtung zugewandt ist und sich in der Längs- und Querrichtung erstreckt;
einen außenseitigen vertikalen Wandabschnitt (33), der sich in der Längs- und vertikalen Richtung erstreckt, und einen innenseitigen vertikalen Wandabschnitt (34), der dem außenseitigen vertikalen Wandabschnitt (33) in der Querrichtung zugewandt ist und sich in der Längs- und vertikalen Richtung erstreckt.

14. Unterstruktur des Fahrzeugs (1) nach Anspruch 13, wobei an dem innenseitigen Endabschnitt des zweiten Bereichs (R2) ein linksseitiger Endabschnitt des oberseitigen seitlichen Wandabschnitts (31) und der linksseitige Endabschnitt des unterseitigen seitlichen Wandabschnitts (32) dazu eingerichtet sind, zu der rechten Seite in einer Querrichtung ausgeschnitten zu sein; und der innere vertikale Wandabschnitt (34) dazu eingerichtet ist, in einer Bogenform zu der rechten Seite gekrümmt zu sein.

15. Ein Fahrzeug (1), einschließend eine Unterstruktur nach einem der vorhergehenden Ansprüche.

## Revendications

1. Une structure inférieure d'un véhicule (1), comprenant :
une paire de bas de caisse droit et gauche (2) s'étendant dans une direction longitudinale de véhicule et présentant une section transversale fermée ;
plusieurs traverses (60) s'étendant dans une direction de largeur de véhicule entre la paire de bas de caisse (2) et prévues pour être séparées les unes des autres dans la direction longitudinale de véhicule ; et
un renfort (30) s'étendant dans la direction longitudinale de véhicule à l'intérieur de la section transversale fermée de chacun de la paire de bas de caisse (2) et renforçant le bas de caisse (2), dont une position, dans une direction verticale, chevauche lesdites traverses (60),
dans laquelle ledit renfort (30) inclut une première zone (R1) qui chevauche, dans la direction longitudinale de véhicule, lesdites traverses (60) et **caractérisé en ce qu'**une deuxième zone (R2) qui est positionnée, dans la direction longitudinale de véhicule, entre les traverses (60), et une partie d'extrémité côté intérieur, dans la direction de largeur de véhicule, de ladite deuxième zone (R2) du renfort (30) est positionnée sur un côté extérieur, dans la direction de largeur de véhicule, d'une partie d'extrémité côté intérieur, dans la direction de largeur de véhicule, de ladite première zone (R1) du renfort (30).

2. Structure inférieure du véhicule (1) de la revendication 1, dans laquelle une position, dans la direction de largeur de véhicule, de ladite partie d'extrémité côté intérieur de la deuxième zone (R2) du renfort (30) change selon une distance de celle-ci, dans la direction longitudinale de véhicule, par rapport auxdites traverses (60) de telle sorte que plus ladite distance est grande, plus ladite position de la partie d'extrémité côté intérieur de la deuxième zone (R2) du renfort (30) est vers l'extérieur, dans la direction de largeur de véhicule.

3. Structure inférieure du véhicule (1) de la revendication 2, dans laquelle ladite partie d'extrémité côté intérieur de la deuxième zone (R2) du renfort (30) est en forme d'arc dans une vue en plan de telle sorte qu'une partie centrale de celle-ci est le plus évidée vers l'extérieur, dans la direction de largeur de véhicule.

4. Structure inférieure du véhicule (1) selon la revendication 3, dans laquelle le point de sommet (35a) de la partie d'extrémité côté intérieur évidée (35) correspond à la position centrale dans la direction longitudinale de la deuxième zone (R2).

5. Structure inférieure du véhicule (1) selon la revendication 4, dans laquelle la profondeur de la partie de sommet (35a) de la partie d'évidement côté intérieur (35) depuis la partie d'extrémité côté intérieur du renfort (30) est inférieure à 1/2 de la largeur, dans la direction transversale, de l'autre partie du renfort (30) que la partie d'évidement côté intérieur (35).

6. Structure inférieure du véhicule (1) de l'une quelconque des revendications précédentes, dans laquelle ladite partie d'extrémité côté intérieur de la première zone (R1) du renfort (30) est configurée pour s'étendre dans la direction longitudinale de véhicule le long d'une partie d'extrémité côté extérieur, dans la direction de largeur de véhicule, de ladite traverse (60).

7. Structure inférieure du véhicule (1) de l'une quelconque des revendications précédentes, dans laquelle ledit renfort (30) présente plusieurs lignes de crête (40, 44) s'étendant dans la direction de largeur de véhicule.

8. Structure inférieure du véhicule (1) selon la revendication 7, dans laquelle les parties de ligne de crête (40, 44) au niveau de la deuxième zone (R2) sont plus courtes que ces parties (40, 44) au niveau de la première zone (R1).

9. Structure inférieure du véhicule (1) selon l'une quelconque des revendications précédentes, dans laquelle une partie de paroi verticale côté extérieur (33) du renfort (30) est fixée à une partie de paroi latérale extérieure (13) du bas de caisse (2) et, au moins dans la première zone (R1), une partie de paroi verticale côté intérieur (34) du renfort (30) est fixée à une partie de paroi latérale intérieure (23) du bas de caisse (2).

10. Structure inférieure du véhicule (1) de la revendication 9, dans laquelle la partie de paroi verticale côté intérieur (34) du renfort (30) est séparée de et non fixée à la partie de paroi latérale intérieure (23) du bas de caisse (2) à l'intérieur de la seconde région (R2), en particulier au niveau d'une partie d'évidement côté intérieur (35) du renfort (30).

11. Structure inférieure du véhicule (1) de l'une quelconque des revendications précédentes, dans laquelle les plusieurs traverses (60) incluent au moins une traverse côté avant (60a) et une traverse côté arrière (60b) et la deuxième zone (R2) est située entre ladite traverse côté avant (60a) et ladite traverse côté arrière (60b).

12. Structure inférieure du véhicule (1) de la revendication 11, dans laquelle chacune d'une partie du renfort (30) qui est positionnée sur le côté avant de la traverse côté avant (60a) et d'une autre partie du renfort (30) qui est positionnée sur le côté arrière de la traverse côté arrière (60b) est configurée comme dans la première zone (R1).

13. Structure inférieure du véhicule (1) de l'une quelconque des revendications précédentes, dans laquelle le renfort (30) présente une section transversale fermée de forme rectangulaire et comprend
une partie de paroi latérale côté supérieur (31) s'étendant dans la direction longitudinale et transversale et une partie de paroi latérale côté inférieur (32) faisant face à la partie de paroi latérale côté supérieur (31) dans la direction verticale et s'étendant dans la direction longitudinale et transversale ;
une partie de paroi verticale côté extérieur (33) s'étendant dans la direction longitudinale et verticale et une partie de paroi verticale côté intérieur (34) faisant face à la partie de paroi verticale côté extérieur (33) dans la direction transversale et s'étendant dans la direction longitudinale et verticale.

14. Structure inférieure du véhicule (1) de la revendication 13, dans laquelle, au niveau de la partie d'extrémité côté intérieur de ladite deuxième zone (R2), une partie d'extrémité côté gauche de la partie de paroi latérale côté supérieur (31) et la partie d'extrémité côté gauche de la partie de paroi latérale côté inférieur (32) sont configurées pour être découpées vers le côté droit dans une direction transversale ; et la partie de paroi verticale intérieure (34) est configurée pour être incurvée en forme d'arc vers le côté droit.

15. Un véhicule (1) incluant une structure inférieure selon l'une quelconque des revendications précédentes.
